# EUROPEAN PATENT SPECIFICATION

(11) **EP 2 812 610 B1**
(45) Date of publication and mention of the grant of the patent: **08.07.2020**
(21) Application number: 13746597.7
(22) Date of filing: 06.02.2013
(51) Int. Cl.: H02K 7/10, F02N 15/06, F16H 55/08, F02N 11/00, F02N 15/00

(54) **VEHICLE STARTER AND DRIVING GEAR THEREOF**
FAHRZEUGANLASSER UND ANTRIEB DAFÜR
DÉMARREUR DE VÉHICULE AUTOMOBILE ET ENGRENAGE D'ENTRAÎNEMENT DE CELUI-CI

(30) Priority: 06.02.2012 CN 201210025312
(43) Date of publication of application: 17.12.2014
(73) Proprietor: SEG Automotive Germany GmbH, 70499 Stuttgart (DE)
(72) Inventor: DENG, Fangmin, Changsha Hunan 410100 (CN); STAHL, Micheal, Changsha Hunan 410100 (CN); JURASCHKA, Andreas, Changsha Hunan 410100 (CN)
(74) Representative: Steinbauer, Florian
(86) International application number: PCT/CN2013/071463
(87) International publication number: WO 2013/117161

(56) References cited:
- CN-U- 202 017 755
- CN-U- 202 017 755
- CN-U- 202 441 836
- JP-A- 2001 248 710
- JP-A- 2002 250 428
- JP-A- 2009 236 265
- KR-A- 20100 063 307
- US-A1- 2011 308 490

## Description

### Technical Field

The invention relates to a driving gear used in a vehicle starter and a vehicle starter comprising such a driving gear.

### Background Art

CN 202 017 755 U describes a driving gear used in a vehicle starter.

JP 2001 248710 A describes a speed reduction section of an engine starter.

US 2011/308490 A1 describes a starting device with a pinion which is displaceable axially on a pinion shaft between two stops.

JP 2002 250428 A describes an arrangement in which the chamfered part of a tooth of the first drive gear and the chamfered part of a tooth of the second drive gear are formed.

Electric starters are generally used in current vehicles for starting the engines of the vehicles. A starter is such a component that converts the electricity stored in a battery of a vehicle into mechanical energy to drive the engine of the vehicle to operate, so that the engine is started.

A starter generally comprises a DC motor, a transmission mechanism, a control device, etc. When the engine of the vehicle is to be started, the motor is energized by a direct current from the battery to generate a rotational torque. The rotational torque is transmitted by the transmission mechanism to a ring gear on a flywheel of the engine to drive a crank shaft of the engine to rotate. The transmission mechanism comprises a speed reducing mechanism coupled with an output shaft of the motor, an overrunning clutch coupled with the speed reducing mechanism, a drive shaft having a back end coupled with the overrunning clutch via a spline, and a pinion mounted to a front end of the drive shaft for driving the ring gear. The spline comprises an internal spline part formed in the overrunning clutch and an external spline part formed on the back end of the drive shaft, the external spline part being mating with the internal spline part and axially slidable with respect to it. The control device is able to control the operation of the motor, as well as to control the drive shaft to move axially so that the pinion is engaged with and disengaged from the ring gear.

When the starter is actuated, the pinion is moved forwards together with the drive shaft, so that the teeth of the pinion abut against the teeth of the ring gear under a spring force. Then, the pinion is rotated together with the drive shaft, so that the teeth of the pinion slide into slots of the ring gear to effect the meshing of the pinion and the ring gear.

If the pinion cannot be engaged quickly into the ring gear, they will collide with each other with their teeth for a long time, which has a negative effect on the starting speed of the engine. In addition, the teeth of the pinion have a hardness which is generally higher than that of the teeth of the ring gear, so that the material in the front ends of the teeth of the ring gear may be cut away by the teeth of the pinion (tooth milling phenomenon), which results in early damage of the ring gear.

In order that the pinion and the ring gear may be engaged quickly, the teeth of the pinion and the ring gear are generally formed with top chamfers and side chamfers at the facing end surfaces of the pinion and the ring gear, by means of which chamfers, the teeth of the pinion are guided to slide along the teeth of the ring gear.

However, according to the prior art, the pinion needs to run through a very large relative rotational angle before it is allowed to be engaged into the ring gear. Thus, it is desired to solve the problem found in the prior art, that is, the engaging-in time of the pinion is long.

### Summary of the Invention

An object of the invention is to make improvement to the pinion (driving gear) used in the vehicle starter, so that it can be engaged into the ring gear quickly.

The present invention provides a drinving gear of a vehicle starter according to claim 1.

According to one aspect of the invention, there provides a driving gear of a vehicle starter, the driving gear comprising a plurality of teeth, and each tooth comprising a top chamfer formed between a top land and a front end face of the tooth and a side chamfer formed between a non-driving flank and the front end face of the tooth; wherein the distance from a radially inner most point of the top chamfer to the top land is in the range of 0.4 to 0.75 times the height of the tooth; wherein the angle formed between the intersection line between the top chamfer and the front end face and a longitudinal central line of the tooth is in the range of 125 to 155°; and wherein the angle between the top chamfer and the front end face is in the range of 15 to 32°.

According to a preferred embodiment of the invention, the distance from the radially inner most point of the top chamfer to the top land is in the range of 0.5 to 0.7 times the height of the tooth.

According to a preferred embodiment of the invention, the angle formed between the intersection line between the top chamfer and the front end face and the longitudinal central axis of the tooth is in the range of 135 to 150°.

According to a preferred embodiment of the invention, the angle formed between the top chamfer and the front end face is in the range of 20 to 30°.

According to a preferred embodiment of the invention, the lateral distance from the intersection line between the side chamfer and the front end face to the root of the driving flank is in the range of 0.3 to 0.65, preferably 0.35 to 0.5, times the thickness of the tooth.

According to a preferred embodiment of the invention, at least one to all of the
intersection lines between any two of the top land, the driving flank, a non-driving flank which is opposite to the driving flank, the top chamfer and the side chamfer of a tooth are in the form of rounded edges.

According to a preferred embodiment of the invention, the angle formed between the side chamfer and the front end face is in the range of 20 to 60°, preferably 30 to 50°.

According to of the invention another aspect, there provides a the vehicle starter, which comprises a motor; a speed reducing mechanism coupled with an output shaft of the motor; an overrunning clutch coupled with the speed reducing mechanism; a drive shaft coupled with the overrunning clutch via a spline; and a driving gear described above, carried by the drive shaft, for outputting a rotational movement.

According to the invention, by optimizing the top chamfer and/or the side chamfer of each tooth of the driving gear, the maximum rotational angle required for engaging-in of the driving gear can be reduced. Thus, when the starter is actuated, the driving gear can be engaged into the ring gear on the flywheel of the engine in a short time, so that the engine can be started more quickly and more smoothly. In addition, the tooth milling action of the driving gear applied to the ring gear can be suppressed, which results in an increased life times the ring gear.

### Brief Description of the Drawings

Figure 1 is a schematic view of a portion of a vehicle starter according to a preferred embodiment of the invention.
Figure 2 is an enlarged schematic view of a tooth of the pinion of the starter.
Figure 3 is an enlarged schematic view showing a tooth of the pinion of the starter being engaged with the teeth of the ring gear.
Figure 4 is an enlarged schematic view showing the stages for engaging the pinion of the starter with the ring gear.
Figures 5 and 6 are schematic front and top views showing parameters of the chamfers of the tooth of the pinion.
Figure 7 is a schematic view showing the inclination of the top chamfer of the tooth of the pinion.
Figure 8 is a schematic front view for explaining the optimization of the top chamfer according to the principle of the invention.
Figure 9 is a schematic front view for explaining the combined optimization of the top chamfer and the side chamfer according to the principle of the invention.

### Detailed Description of Preferred Embodiments

Now some preferred embodiments of the invention will be described with reference to the drawings.

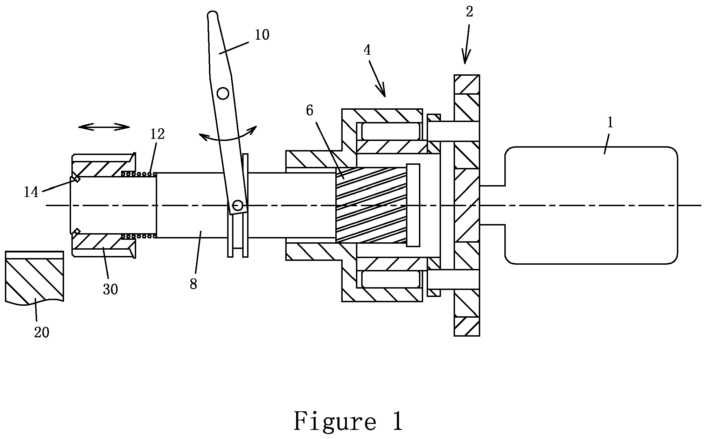

Figure 1 shows a portion of a vehicle starter according to a preferred embodiment of the invention. The starter mainly comprises a DC motor 1, a transmission mechanism, a control device, etc.

The motor 1 is mounted in a housing (not shown) of the starter. When the engine of the vehicle is to be started, the control device functions to supply the motor 1 with a DC electric current from a battery of the vehicle, so that the motor 1 runs to generate a rotational torque. The rotational torque is transmitted to a ring gear 20 on a flywheel of the engine via the transmission mechanism to drive a crank shaft of the engine to rotate.

The transmission mechanism mainly comprises a speed reducing mechanism 2 coupled with the output shaft of the motor 1, an overrunning clutch 4 coupled with the speed reducing mechanism 2, a drive shaft 8 having an back end (the end near the motor 1) coupled with the overrunning clutch 4 via an axially slidable spline 6, and a pinion (the driving gear) 30 mounted to a front end (the end away from the motor 1) of the drive shaft 8 for driving the ring gear (driven gear) 20.

The speed reducing mechanism 2 may be any type of speed reducing mechanism, for example, the planetary gear type speed reducing mechanism shown in Figure 1. The speed reducing mechanism 2 has an output end coupled with a driving part of the overrunning clutch 4, and a driven part of the overrunning clutch 4 transmits a rotational movement from the speed reducing mechanism 2 to the drive shaft 8 via the spline 6.

The spline 6 is slidable in an axial direction to apply an axial displacement to the drive shaft 8. Such an axial displacement is effected by a lever 10 of the control device. The lever 10 is able to pivot about a pivot shaft at its middle portion in opposite directions indicated by the curved arrows as shown in Figure 1 to drive the drive shaft 8 to be axially displaced in opposite directions indicated by the straight arrows as shown in Figure 1.

Further, the pinion 30 is mounted to a front end segment of the drive shaft 8 in a way of axially slidable with respect to the drive shaft 8. A return spring 12 mounted around the front end segment of the drive shaft pushes forwards against the pinion 30. The drive shaft is provided with a stop element or structure, for example, a clamp ring 14 shown in Figure 1, for retaining the pinion 30 in a front most position with respect to the drive shaft 8 to prevent the pinion 30 from being further moved forwards.

When the drive shaft 8 is in the axially back most position as shown in Figure 1, the pinion 30 is disengaged from the ring gear 20 on the flywheel of the engine.

When the starter is turned on, the control device controls the lever 10 to pivot to drive the drive shaft 8 to move forwards, and the pinion 30 is moved forwards with the drive shaft 8. When the pinion 30 comes into contact with the ring gear 20, the teeth of the pinion 30 generally cannot be engaged into the slots of the ring gear 20 immediately. Rather, one or more teeth of the pinion 30 abut end-to-end against one or more teeth of the ring gear 20. Now, the pinion 30 is stopped by the ring gear 20 in the axial direction and cannot be moved forwards any further with the drive shaft 8, so the return spring 12 is compressed. Then, the control device activates the motor 1, so that the output rotational movement of the motor 1 is transmitted to the pinion 30 via the speed reducing mechanism 2, the overrunning clutch 4, the spline 6 and the drive shaft 8 in sequence, so that the pinion 30 rotates with respect to the ring gear 20. After a certain rotational angle has been rotated through, some teeth of the pinion 30 slide into the slots of the ring gear 20 under the pushing force of the return spring 12, as a result of which, the pinion 30 and the ring gear 20 are meshed with each other. In this way, the pinion 30 drives the ring gear 20 to rotate, whereby the flywheel of the engine is driven to rotate, and thus the engine is started. Once the engine is started, the control device controls the lever 10 to move the drive shaft 8 backwards, so that the pinion 30 is disengaged from the ring gear 20.

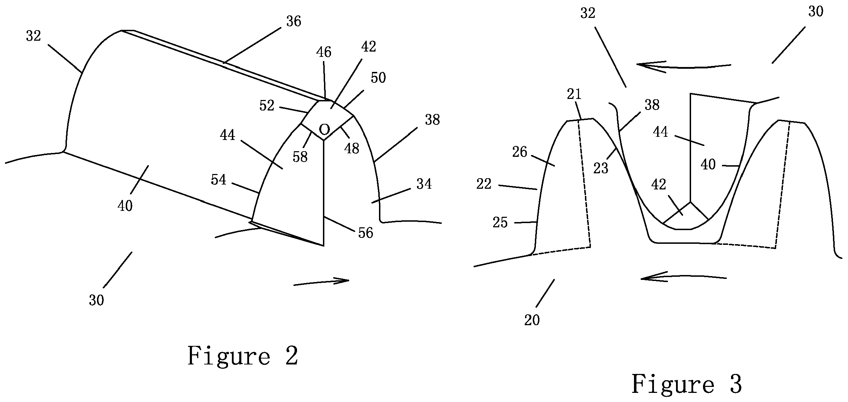

Figure 2 schematically shows a tooth 32 of the pinion 30. The tooth 32 is inserted, from its front end face 34, into a slot of the ring gear, and then drives a tooth of the ring gear in the direction indicated by the arrow shown in Figure 2. The tooth 32 comprises the front end face 34 which is perpendicular to the central axis of the pinion, a top land 36 extending backwards from the front end face, and a driving flank 38 and a non-driving flank 40 formed on opposite sides of the top land respectively.

As can be understood from the discussion in the Background Art part of the present application, it is desired that the pinion 30 can be engaged into the ring gear as quickly as possible. For this end, a top chamfer 42 and a side chamfer 44 are generally formed on the front end face 34 of each tooth 32 of the pinion 30.

The top chamfer 42 is formed between the top land 36 and the front end face 34, forming a first intersection line 46 and a second intersection line 48 with the top land 36 and the front end face 34 respectively, and forming a third intersection line 50 and a fourth intersection line 52 with the driving flank 38 and the non-driving flank 40 respectively.

The side chamfer 44 is formed between the non-driving flank 40 and the front end face 34, forming a fifth intersection line 54 and a sixth intersection line 56 with the non-driving flank 40 and the front end face 34 respectively. Further, a seventh intersection line 58 is formed between the top chamfer 42 and the side chamfer 44.

The second intersection line 48, the sixth intersection line 56 and the seventh intersection line 58 meet at an intersection point O, which is the radially inner most point of the top chamfer 42.

It is appreciated that the above intersection lines may each be a straight line or a curved line.

It should be noted that the top chamfer 42 and the side chamfer 44 may each be in the form of a planar surface, as shown in the drawings. However, the invention also covers the embodiments in which the top chamfer 42 and/or the side chamfer 44 is a curved surface.

As shown in Figure 3, each tooth 22 of the ring gear 20 comprises a top land 21, and a driven flank 23 and a non-driven flank 25 formed on opposite sides of the top land 21 respectively. When the pinion 30 drives the ring gear 20, the driving flank 38 of a tooth 32 of the pinion 30 pushes against the driven flank 23 of a corresponding tooth 22 of the ring gear 20 to drive the ring gear 20 to rotate. The tooth 32 which is currently driving the tooth 22 of the ring gear 20 is referred to as the main tooth which provides the maximum driving force.

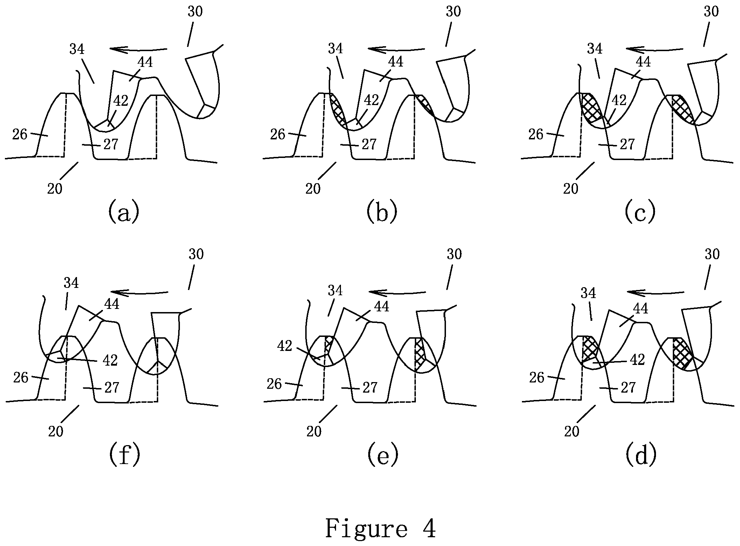

The tooth 22 is formed with a side chamfer 26, which is formed between the non-driven flank 25 and the facing end face 27 (the end face facing towards the starter, which is facing away from the viewer who is looking at Figures 3 and 4) of the tooth 22. Intersection lines are formed between the side chamfer 26 and corresponding faces of the tooth 22. It does not need to form top chamfers on the ring gear for achieving the engagement between the pinion and the ring gear.

It is appreciated that, although the intersection lines on the pinion and the ring gear are illustrated in the form of clear lines, at least one to all of the intersection lines may be machined to present rounded edges, so that the engaging of the pinion with the ring gear can be achieved more quickly and more smoothly. It is also appreciated that other edges or intersection lines between the pinion and the ring gear may also be machined to present rounded edges. Figure 4 schematically shows the engaging procedure of the pinion 30 into the ring gear 20 by stages (a) - (f) in sequence. In these stages, the pinion 30 rotates in the direction indicated by the arrow as illustrated, while the ring gear 20 remains stationary. Two teeth of each of the pinion and the ring gear are depicted in Figure 4 for describing the engaging procedure.

Stage (a) represents an extreme initial engaging state. The pinion 30 should be rotated through the maximum engaging-in angle from the initial engaging state stage (a) before it is allowed to be engaged with the ring gear 20. Of course, according to the initial position of the pinion, the real initial engaging state of the pinion may be one of stages (b) - (f), in the condition of which, the pinion 30 can be engaged with the ring gear 20 only after it is rotated through an engaging-in angle which is smaller than the maximum engaging-in angle, even a zero engaging-in angle.

In stage (a), the driving flank of the front tooth of the pinion 30 is aligned with the driven flank of the front tooth of the ring gear 20, while the back tooth of the pinion 30 is not reached at the back tooth of the ring gear 20 yet.

Then, as the pinion rotates, it comes into stage (b). Now a first contacting area (the left shaded area) is formed between the front end face 34 of the front tooth of the pinion 30 and the facing end face 27 of the front tooth of the ring gear 20, and a second contacting area (the right shaded area) is formed between the front end face of the back tooth of the pinion 30 and the facing end face of the back tooth of the ring gear 20.

Then, as the pinion rotates further, it comes into stage (c), wherein the first and the second contacting areas have both been increased with respect to the previous stage.

Then, as the pinion rotates further, it comes into stage (d), wherein the first contacting area becomes to be reduced with respect to the previous stage, and the second contacting area continues increasing.

Then, as the pinion rotates further, it comes into stage (e), wherein the first contacting area continues reducing, and the second contacting area becomes to be reduced with respect to the previous stage.

Then, as the pinion rotates further, the first contacting area is reduced to zero first, and the second contacting area is reduced to zero later, so that it comes into stage (f). In this stage, both the first and second contacting areas disappear, the side chamfer 44 of the front tooth of the pinion 30 slides onto the side chamfer 26 of the front tooth of the ring gear 20 and is guided by it, and the side chamfer of the back tooth of the pinion 30 slides onto the side chamfer of the back tooth of the ring gear 20 and is guided by it. From stage (f), the front and back teeth of the pinion 30 can slide respectively into the slots of the ring gear 20 facing them.

It can be seen from the above description that the first contacting area between the front tooth of the pinion and the corresponding tooth of the ring gear disappears earlier than the second contacting area between the back tooth of the pinion and the corresponding tooth of the ring gear. Thus, when the front tooth comes into a state that it is allowed to slide into a slot, the back tooth is still be blocked from sliding into the next slot, which results in long engaging-in time of the pinion.

The invention is aimed at shortening the engaging-in time of the pinion. For this end, a basic solution of the invention is to modify the top chamfer and/or side chamfer of the pinion, so that in the engaging-in procedure of the pinion, the time at which the back tooth is allowed to slide in (rotational angle position) and the time at which the front tooth is allowed to slide in (rotational angle position) are as close to each other as possible, even are coincident with each other.

Some parameters related with the top chamfer and the side chamfer of the pinion will be defined before the embodiments of the invention are described in details.

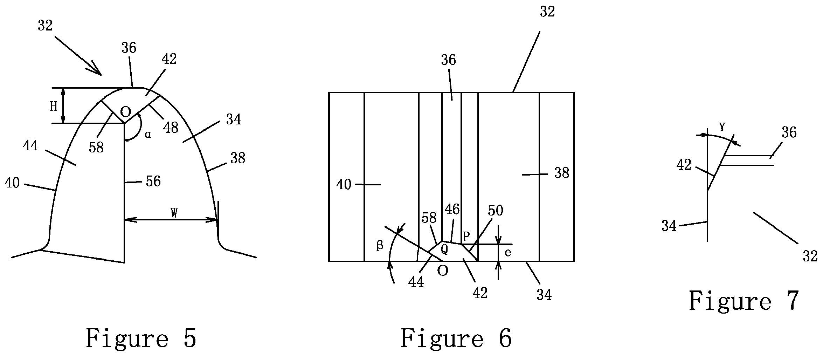

First, with reference to Figure 5 which shows in a front view a tooth 32 of the pinion in the axial direction of the pinion, the angle formed between the second intersection line 48 and the longitudinal central axis of the tooth (i.e., a line connecting the center of the pinion and the center of the top land, not shown) is represented by α, the vertical height measured from an intersection point O of the second intersection line 48, the sixth intersection line 56 and the seventh intersection line 58 to the top land 36 is represented by H, and the lateral distance measured from the sixth intersection line 56 to the root of the driving flank 38 is represented by W.

It should be noted that, in the illustrated embodiment, the sixth intersection line 56 is parallel with the longitudinal central axis of the tooth, thus the angle α is marked between the second intersection line 48 and the sixth intersection line 56 for clear; it is appreciated that, however, the sixth intersection line 56 may not be parallel with the longitudinal central axis of the tooth in some embodiments.

Then, with reference to Figure 6 which shows the tooth 32 of the pinion in a top view taken directly above it, the angle formed between the side chamfer 44 and the front end face 34 is represented by β. The axial distance measured from the intersection point P of the first intersection line 46 and the third intersection line 50 to the front end face 34 is represented by e.

Then, with reference to Figure 7 which is taken in a direction parallel with both the front end face 34 and the top chamfer 42, the angle formed between the front end face 34 and the top chamfer 42 is represented by γ. It can be seen that, with respect to the front end face 34, the top chamfer 42 is not only inclined in an axially backward direction, but also inclined towards the non-driving flank. The intersection point Q of the first intersection line 46 and the seventh intersection line 58 is located at an axial position which is backward from the axial position of the intersection point P of the first intersection line 46 and the third intersection line 50.

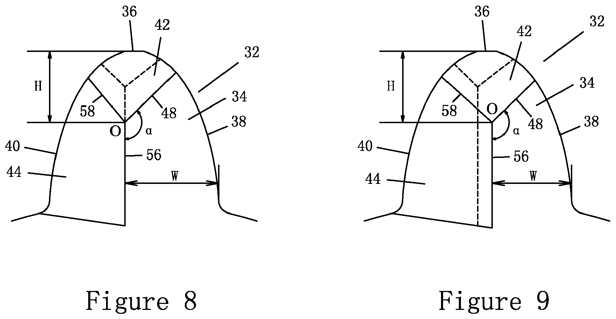

According to an embodiment of the invention, optimization of the top chamfer is conducted, as shown in Figure 8, wherein parameters to be optimized include the above mentioned height H, angle α and angle γ, and the optimization target is that, in the engaging-in procedure, the contacting areas between (1) the front end faces of two teeth of the pinion which are neighbored with each other in the direction of rotation and are to be engaged into the ring gear and (2) the facing end faces of corresponding teeth of the ring gear can be reduced to zero at substantially the same as possible.

Specifically, after the pinion rotates from the extreme initial engaging state in stage (a) shown in Figure 4 through a first angle, the front one of the two neighboring front and back teeth of the pinion that are to be engaged in comes into a ready-to-slide-in state. However, now the back tooth has not come into the ready-to-slide-in state. Then, after the pinion further rotates through an additional angle, the back tooth also comes into the ready-to-slide-in state. Thus, the maximum rotational angle through which the whole pinion is allowed to be engaged in is equals to the first angle plus the additional angle.

It should be noted that, the required rotational angle (the first angle) through which the front tooth reaches the ready-to-slide-in state mainly depends on the width of the side chamfer. By increasing the width of the side chamfer, the first angle can be reduced. However, taken into consideration of other aspects, the width of the side chamfer cannot be increased indefinitely. Thus, according to the invention, optimization of the top chamfer of the pinion is conducted first for reducing the value of the additional angle.

Some main parameters related with the top chamfer and the side chamfer in an embodiment in which optimization is to be conducted to the top chamfer in the mating structure of the pinion and the ring gear are listed in the table below.

| | the pinion | the ring gear |
|---|---|---|
| Number of teeth | 12 | 159 |
| Normal module | 3 | 3 |
| Pressure angle | 14.5° | 15° |
| Tooth width | 23.5 mm | 20 mm |
| Addendum factor | 1.000 | 1.066 |
| Dedendum factor | 1.197 | 1.134 |
| Radius of the tooth fillet | 0.6 mm | 2.5 mm |
| Addendum modification factor | 0.780 | -0.066 |
| Helical angle | 0° | 0° |

Main parameters before optimization:
H=2 mm, α=121°, γ=34°, W=3.1 mm, e=0.96 mm.

The maximum rotational angle required for engaging-in (i.e., the angle that the pinion should be rotated through from the extreme initial engaging state in stage (a) shown in Figure 4 to stage (f) in which the pinion is allowed to be engaged into the ring gear) before optimization is 18.5°.

More specifically, when the pinion is rotated through the first angle of about 14° from the extreme initial engaging state in stage (a) shown in Figure 4, the front one of the two neighboring front and back teeth of the pinion that are to be engaged in comes into a ready-to-slide-in state. However, now the back tooth has not reached the ready-to-slide-in state yet. After the pinion is further rotated through the additional angle of 4°, the back tooth comes into the ready-to-slide-in state also. Thus, the maximum rotational angle through which the whole pinion is allowed to be engaged in is as large as 18.5°. By setting the optimization target as reducing the additional angle, the main parameters obtained after the optimization of the top chamfer are changed to:
H=4.5 mm, α=149°, γ=25°, W=3.1 mm, e=0.9 mm.

After the optimization of the top chamfer, the maximum rotational angle through which the whole pinion is allowed to be engaged in is about 14°.

It can be seen that, by conducting optimization of the top chamfer, the required additional angle through which the back tooth comes into the ready-to-slide-in state is reduced to approximately zero, and thus the required rotational angles for the two tooth coming into the ready-to-slide-in state are nearly the same. In this way, the maximum rotational angle through which the whole pinion is allowed to be engaged in is reduced (reduced by 4.5° in the above embodiment, or by a reducing rate of about 19%).

According to a further embodiment of the invention, optimization of the side chamfer is conducted, as shown in Figure 9, wherein optimization parameter is the above mentioned lateral distance W (essentially optimization of the width of the side chamfer), with the optimization target being that the contacting areas between (1) the
front end faces of the two neighboring front and back teeth of the pinion which are to be engaged in and (2) the facing end faces of the corresponding teeth of the ring gear is reduced to zero as quickly as possible.

An embodiment in which optimization of the side chamfer is further conducted on the basis of the embodiment where the optimization of the top chamfer as described above has been finished will be described now.

Main parameters of the top chamfer and the side chamfer after the combined optimization include:
H=4.5 mm, α=149°, γ=25°, W=2.2 mm, e=1.2 mm.

By means of the combined optimization of the top chamfer and the side chamfer, the maximum rotational angle through which the whole pinion is allowed to be engaged in is about 12°.

Thus, after the combined optimization of the top chamfer and the side chamfer, the maximum rotational angle through which the whole pinion is allowed to be engaged in is reduced significantly (reduced by 6.5° in the above embodiment, or by a reducing rate of about 28%).

According to the invention, combined optimizations of the top chamfer and the side chamfer have been conducted based on the structure composed of the pinion and the ring gear which have varied parameters, so that general ranges of the values of the optimization parameters are set as listed below:
Height H: 0.4 to 0.75 times, preferably 0.5 to 0.7 times, the height of the tooth.
Angle α: 125 to 155°, preferably 135 to 150°.
Angle γ: 15 to 32°, preferably 20 to 30°.
Lateral distance W: 0.3 to 0.65 times, preferably 0.35 to 0.5 times, the thickness of the tooth.

It is appreciated that, for different structures composed of the pinion and the ring gear, the ranges of the above parameters may be varied.

Further, as to the angle β formed between the side chamfer 44 and the front end face 34, it has nearly no effect on the maximum rotational angle necessary for engaging-in, but has effects on the inserting procedure after the teeth of the pinion are allowed to be engaged into the slots of the ring gear as well as effects on the strength of the front end of the pinion. Taking all the factors into consideration in balance, the value of the angle β is generally set in the range of 20 to 60°, preferably 30 to 50°.

Those skilled in the art can understand that the above optimization can be carried out by various concrete computer programs for optimization.

Further, in the above embodiments, the teeth of the pinion and the ring gear are all straight teeth; however, the invention is also applicable in the case where the teeth of the pinion and the ring gear are helical teeth.

According to the invention, by conducting combined optimization to the top chamfer and the side chamfer of each tooth of the pinion, the maximum rotational angle required for engaging-in of the pinion can be reduced significantly. Thus, when the starter is actuated, the pinion can be engaged into the ring gear on the flywheel of the engine in a shortened time, so that the engine can be started more quickly and more smoothly. In addition, the tooth milling action of the pinion applied to the ring gear can be suppressed.

The pinion in which combined optimization has conducted to the top chamfer and the side chamfer according to the invention is applicable in various vehicle starters, for example, starters for diesel vehicles.

While certain embodiments have been described, these embodiments have been presented by way of example only. The attached claims are intended to cover all the modifications, substitutions and changes as would fall within the scope of the claims.

## Claims

1. A driving gear (30) of a vehicle starter, comprising a plurality of teeth, each tooth (32) comprising a top chamfer (42) formed between a top land (36) and a front end face (34) of the tooth (32) and a side chamfer (44) formed between a non-driving flank (40) and the front end face (34) of the tooth (32); the driving gear being **characterized in that** the distance (H) from a radially inner most point of the top chamfer (42) to the top land (36) is in the range of 0.4 to 0.75 times the height of the tooth (32); the angle (α) formed between the intersection line between the top chamfer (42) and the front end face (34) and a longitudinal central axis of the tooth (32) is in the range of 125 to 155°; and the angle (γ) between the top chamfer (42) and the front end face (34) is in the range of 15 to 32°.

2. The driving gear (30) of claim 1, wherein the distance (H) from the radially inner most point of the top chamfer (42) to the top land (36) is in the range of 0.5 to 0.7 times the height of the tooth (32).

3. The driving gear (30) of claim 1 or 2, wherein the angle (α) formed between the intersection line between the top chamfer (42) and the front end face (34) and the longitudinal central axis of the tooth (32) is in the range of 135 to 150°.

4. The driving gear (30) of claim 1 or 2, wherein the angle (γ) formed between the top chamfer (42) and the front end face (34) is in the range of 20 to 30°.

5. The driving gear (30) of any one of claims 1 to 4, wherein the lateral distance (W) from the intersection line between the side chamfer (44) and the front end face (34) to the root of the driving flank (38) is in the range of 0.3 to 0.65 times the thickness of the tooth (32).

6. The driving gear (30) of any one of claims 1 to 4, wherein the lateral distance (W) from the intersection line between the side chamfer (44) and the front end face (34) to the root of the driving flank (38) is in the range of 0.35 to 0.5 times the thickness of the tooth (32).

7. The driving gear (30) of any one of claims 1 to 6, wherein at least one to all of the intersection lines between any two of the top land (36), the driving flank (38), a non-driving flank (40) which is opposite to the driving flank (38), the top chamfer (42) and the side chamfer (44) of a tooth (32) are in the form of rounded edges.

8. The driving gear (30) of any one of claims 1 to 7, wherein the angle (β) formed between the side chamfer (44) and the front end face (34) is in the range of 20 to 60°.

9. The driving gear (30) of any one of claims 1 to 8, wherein the angle (β) formed between the side chamfer (44) and the front end face (34) is in the range of 30 to 50°.

10. A vehicle starter, comprising:
a motor (1);
a speed reducing mechanism (2) coupled with an output shaft of the motor;
an overrunning clutch (4) coupled with the speed reducing mechanism (2);
a drive shaft (8) coupled with the overrunning clutch (2) via a spline; and
a driving gear (30) of any one of claims 1 to 9, carried by the drive shaft (8), for outputting a rotational movement.

## Patentansprüche

1. Antriebszahnrad (30) eines Fahrzeugstarters, das eine Vielzahl von Zähnen aufweist, wobei jeder Zahn (32) eine obere Fase (42), die zwischen einem oberen Steg (36) und einer vorderen Stirnfläche (34) des Zahns (32) ausgebildet ist, und eine Seitenfase (44), die zwischen einer nicht antreibenden Flanke (40) und der vorderen Stirnfläche (34) des Zahns (32) ausgebildet ist, aufweist;
wobei sich das Antriebszahnrad (30) dadurch auszeichnet, dass der Abstand (H) von einem radial innersten Punkt der oberen Fase (42) zum oberen Steg (36) im Bereich des 0,4- bis 0,75-fachen der Dicke des Zahns (32) liegt;
der Winkel (a), der zwischen der Schnittlinie zwischen der oberen Fase (42) und der vorderen Stirnfläche (34) und einer Längsmittelachse des Zahnes (32) gebildet wird, im Bereich von 125 bis 155° liegt; und
der Winkel (γ) zwischen der oberen Fase (42) und der vorderen Stirnfläche (34) im Bereich von 15 bis 32° liegt.

2. Antriebszahnrad (30) nach Anspruch 1, wobei der Abstand (H) vom radial innersten Punkt der oberen Fase (42) zum oberen Steg (36) im Bereich des 0,5- bis 0,7-fachen der Höhe des Zahnes (32) liegt.

3. Antriebszahnrad (30) nach Anspruch 1 oder 2, wobei der Winkel (a), der zwischen der Schnittlinie zwischen der oberen Fase (42) und der vorderen Stirnfläche (34) und der Längsmittelachse des Zahnes (32) gebildet wird, im Bereich von 135 bis 150° liegt.

4. Antriebszahnrad (30) nach Anspruch 1 oder 2, wobei der zwischen der oberen Fase (42) und der vorderen Stirnfläche (34) gebildete Winkel (γ) im Bereich von 20 bis 30° liegt.

5. Antriebszahnrad (30) nach einem der Ansprüche 1 bis 4, wobei der seitliche Abstand (W) von der Schnittlinie zwischen der Seitenfase (44) und der vorderen Stirnfläche (34) zum Fuß der antreibenden Flanke (38) im Bereich des 0,3- bis 0,65-fachen der Dicke des Zahns (32) liegt.

6. Antriebszahnrad (30) nach einem der Ansprüche 1 bis 4, wobei der seitliche Abstand (W) von der Schnittlinie zwischen der Seitenfase (44) und der vorderen Stirnfläche (34) zum Fuß der antreibenden Flanke (38) im Bereich des 0,35 bis 0,5-fachen der Dicke des Zahns (32) liegt.

7. Antriebszahnrad (30) nach einem der Ansprüche 1 bis 6, wobei mindestens eine bis alle Schnittlinien zwischen zwei beliebigen des oberen Stegs (36), der antreibenden Flanke (38), einer nicht antreibenden Flanke (40), die der antreibenden Flanke (38) gegenüberliegt, der oberen Fase (42) und der Seitenfase (44) eines Zahnes (32) die Form von abgerundeten Kanten haben.

8. Antriebszahnrad (30) nach einem der Ansprüche 1 bis 7, wobei der zwischen der Seitenfase (44) und der vorderen Stirnfläche (34) gebildete Winkel (β) im Bereich von 20 bis 60° liegt.

9. Antriebszahnrad (30) nach einem der Ansprüche 1 bis 8, wobei der zwischen der Seitenfase (44) und der vorderen Stirnfläche (34) gebildete Winkel (β) im Bereich von 30 bis 50° liegt.

10. Fahrzeugstarter, aufweisend:
einen Motor (1);
einen Drehzahlreduzierungsmechanismus (2), der mit einer Abtriebswelle des Motors gekoppelt ist;
eine Freilaufkupplung (4), die mit dem Drehzahlreduzierungsmechanismus (2) gekoppelt ist;
eine Antriebswelle (8), die über eine Keilnut mit der Freilaufkupplung (2) gekoppelt ist; und
ein Antriebszahnrad (30) nach einem der Ansprüche 1 bis 9, das von der Antriebswelle (8) getragen wird, um eine Drehbewegung auszugeben.

## Revendications

1. Engrenage menant (30) d'un démarreur de véhicule, comportant une pluralité de dents, chaque dent (32) comportant un chanfrein supérieur (42) formé entre une surface de tête (36) et une face frontale avant (34) de la dent (32) et un chanfrein latéral (44) formé entre un flanc non menant (40) et la face frontale avant (34) de la dent (32) ;
l'engrenage menant étant **caractérisé en ce que**
la distance (H) depuis un point le plus radialement intérieur du chanfrein supérieur (42) jusqu'à la surface de tête (36) est dans l'intervalle de 0,4 à 0,75 fois la hauteur de la dent (32) ;
l'angle (α) formé entre la ligne d'intersection entre le chanfrein supérieur (42) et la face frontale avant (34) et un axe central longitudinal de la dent (32) est dans l'intervalle de 125 à 155° ; et
l'angle (γ) entre le chanfrein supérieur (42) et la face frontale avant (34) est dans l'intervalle de 15 à 32°.

2. Engrenage menant (30) selon la revendication 1, dans lequel la distance (H) depuis le point le plus radialement intérieur du chanfrein supérieur (42) jusqu'à la surface de tête (36) est dans l'intervalle de 0,5 à 0,7 fois la hauteur de la dent (32).

3. Engrenage menant (30) selon la revendication 1 ou 2, dans lequel l'angle (α) formé entre la ligne d'intersection entre le chanfrein supérieur (42) et la face frontale avant (34) et l'axe central longitudinal de la dent (32) est dans l'intervalle de 135 à 150°.

4. Engrenage menant (30) selon la revendication 1 ou 2, dans lequel l'angle (γ) formé entre le chanfrein supérieur (42) et la face frontale avant (34) est dans l'intervalle de 20 à 30°.

5. Engrenage menant (30) selon l'une quelconque des revendications 1 à 4, dans lequel la distance latérale (W) depuis la ligne d'intersection entre le chanfrein latéral (44) et la face frontale avant (34) jusqu'au fond du flanc menant (38) est dans l'intervalle de 0,3 à 0,65 fois l'épaisseur de la dent (32).

6. Engrenage menant (30) selon l'une quelconque des revendications 1 à 4, dans lequel la distance latérale (W) depuis la ligne d'intersection entre le chanfrein latéral (44) et la face frontale avant (34) jusqu'au fond du flanc menant (38) est dans l'intervalle de 0,35 à 0,5 fois l'épaisseur de la dent (32).

7. Engrenage menant (30) selon l'une quelconque des revendications 1 à 6, dans lequel au moins une ligne parmi toutes les lignes d'intersection entre deux éléments quelconques parmi la surface de tête (36), le flanc menant (38), un flanc non menant (40) qui est opposé au flanc menant (38), le chanfrein supérieur (42) et le chanfrein latéral (44) d'une dent (32) se présente sous la forme de bords arrondis.

8. Engrenage menant (30) selon l'une quelconque des revendications 1 à 7, dans lequel l'angle (β) formé entre le chanfrein latéral (44) et la face frontale avant (34) est dans l'intervalle de 20 à 60°.

9. Engrenage menant (30) selon l'une quelconque des revendications 1 à 8, dans lequel l'angle (β) formé entre le chanfrein latéral (44) et la face frontale avant (34) est dans l'intervalle de 30 à 50°.

10. Démarreur de véhicule, comportant :
un moteur (1) ;
un mécanisme réducteur de vitesse (2) accouplé à un arbre de sortie du moteur ;
un lanceur à roue libre (4) accouplé au mécanisme réducteur de vitesse (2) ;
un arbre d'entraînement (8) accouplé au lanceur à roue libre (2) via une cannelure ; et
un engrenage menant (30) selon l'une quelconque des revendications 1 à 9, porté par l'arbre d'entraînement (8), pour générer un mouvement de rotation.
